# EUROPEAN PATENT APPLICATION

(11) **EP 2 145 718 A2**
(43) Date of publication of application: **20.01.2010**
(21) Application number: 09165581.1
(22) Date of filing: 15.07.2009
(51) Int. Cl.: B23K 20/10

(54) **Ultrasonic welder and joined body obtained by the welder**

(30) Priority: 16.07.2008 JP 2008184463; 25.07.2008 JP 2008191684
(71) Applicant: Calsonic Kansei Corporation, Saitama-shi Saitama 331-8501 (JP)
(72) Inventor: Yoshioka, Shinichi, Saitama-shi, Saitama 331-8501 (JP)
(74) Representative: Ilgart, Jean-Christophe

(57) **Abstract**

A ultrasonic welder includes an anvil (2), a horn (3) configured to sanwich a first member (10) placed on the anvil and a second member (11) placed on the first member with the anvil, and transmit ultrasonic vibration to the second member, so as to join the first and second members, a vibration detector (4) configured to detect a condition of the vibration transmitted to the first member from the second member (6), and a controller configured to stop the ultrasonic vibration of the horn according to the detected condition of the vibration.

## Description

### BACKGROUND OF THE INVENTION

### Field of the Invention

The present invention relates to an ultrasonic welder for joining two members, and a joined body obtained by the welder.

### Description of the Related Art

An ultrasonic metal welder described in JP H05-115986A, for example, has been heretofore used for joining two metal plates (for example, electrode terminals).

This ultrasonic metal welder includes an anvil and a horn. In order to join two metal plates, the two plates are placed on top of one another on the anvil. Next, upon the driving of the ultrasonic metal welder, a pressure unit of the welder presses the horn downwardly. The two metal plates are thereby sandwiched by the horn and the anvil.

Then, the horn vibrates in the horizontal direction by the driving of an ultrasonic transducer of the ultrasonic metal welder, and the ultrasonic vibration is transmitted to the upper side metal plate from the horn, so that the two metal plates are rubbed against each other. Thereby, impurities which are adhered to the contact faces of the metal plates such as an oxide film are eliminated, and frictional heat is generated in the interface of the two metal plates. By this frictional heat, rapid plastic flow is created in the interface of the two metal plates, so that the metal plates are joined as a joined metal plate. The following three methods are known as a method of stopping ultrasonic vibration of a horn.
(1) A method of stopping ultrasonic vibration when a previously set driving time of a horn has passed.
(2) A method of stopping ultrasonic vibration when the previously set amount of depression of an upper side metal plate is obtained.
(3) A method of stopping ultrasonic vibration when the previously set amount of energy of ultrasonic vibration is obtained.

However, in the above methods (1)-(3), conditional values such as a driving time, the amount of depression and the amount of energy are previously set before driving an ultrasonic metal welder. Therefore, if the conditional values are set more than necessary, the horn vibrates even though the joining of the metal pales is already completed. For this reason, the anvil and the lower side metal plate are excessively rubbed, and the joined metal plate becomes damaged in which the thickness in the lower side metal plate is reduced, resulting in unstable joining strength.

### SUMMARY OF THE INVENTION

The present invention has been made in view of the above problem. It is, therefore, an object of the present invention to provide an ultrasonic welder capable of obtaining a joined body having stable strength, and a joined body obtained by the welder.

In order to achieve the above object, a first aspect of the present invention relates to an ultrasonic welder, including: an anvil; a horn configured to sandwich a first member placed on the anvil and a second member placed on the first member with the anvil, and transmit ultrasonic vibration to the second member, so as to join the first and second members; a vibration detector configured to detect a condition of the vibration transmitted to the first member from the second member; and a controller configured to stop the ultrasonic vibration of the horn according to the detected condition of the vibration.

Preferably, the ultrasonic welder further includes a vibration analysis and determination unit configured to measure amplitude of the vibration and a duration time of the vibration according to the detected condition of the vibration, and determine that the joining of the first and second members is completed when the amplitude of the vibration is predetermined amplitude or more and the duration time of the vibration is a predetermined time or more, wherein, the controller stops the ultrasonic vibration of the horn according to the determination of the vibration analysis and determination unit.

Preferably, the vibration detector detects vibration generated in the first member from the start of the ultrasonic vibration of the horn, and outputs a vibration waveform signal, and the vibration analysis and determination unit measures the amplitude of the vibration and the duration time of the vibration according to the vibration waveform signal output from the vibration detector.

Preferably, the ultrasonic welder further includes a detector configured to continuously detect the amount of depression of the second member from the start of the ultrasonic vibration of the horn, wherein the controller sequentially calculates the amount of depression of the second member according to the detected result of the detector, so as to store the calculated result, calculates change in the amount of depression every predetermined time from the start of the storing, determines that the joining of the first and second members is completed when the change is constant at least three times in a row according to the condition of the vibration detected by the vibration detector, and stops the ultrasonic vibration of the horn according to the determination.

A second aspect of the present invention relates to a joined body obtained by using the above-described ultrasonic welder.

### BRIEF DESCRIPTION OF THE DRAWINGS

The accompanying drawings are included to provide further understanding of the invention, and are incorporated in and constitute a part of this specification. The drawings illustrated an embodiment of the invention and, together with the specification, serve to explain the principle of the invention.
FIG. 1 is a view illustrating a system of an ultrasonic welder according a First Embodiment of the present Invention.
FIG. 2 is a view illustrating a condition of a first metal plate and a second metal plate to which ultrasonic vibration is transmitted in the First Embodiment of the present invention.
FIG 3 is a view illustrating a condition of a first metal plate and a second metal plate to which ultrasonic vibration is transmitted in the First Embodiment of the present invention.
FIG. 4 is a flow chart illustrating a control process of stopping ultrasonic vibration in the First Embodiment of the present invention.
FIG. 5 is a view illustrating a waveform of vibration in a first metal plate in the First Embodiment of the present invention.
FIG 6 is a view illustrating a duration time of vibration in the first metal plate in the First Embodiment on the present invention.
FIG. 7 is a view illustrating a system of an ultrasonic welder according to a Second Embodiment of the present invention.
FIG 8 is a flow chart illustrating a control process of stopping ultrasonic vibration in the Second Embodiment of the present invention.
FIG. 9 is a graph illustrating change in the amount of depression of a second metal plate in the Second Embodiment of the present invention.

### DETAILED DESCRIPTION OF THE PREFERRED EMBODIMENT

Hereinafter, embodiments of the present invention will be described with reference to the drawings.

### [First Embodiment]

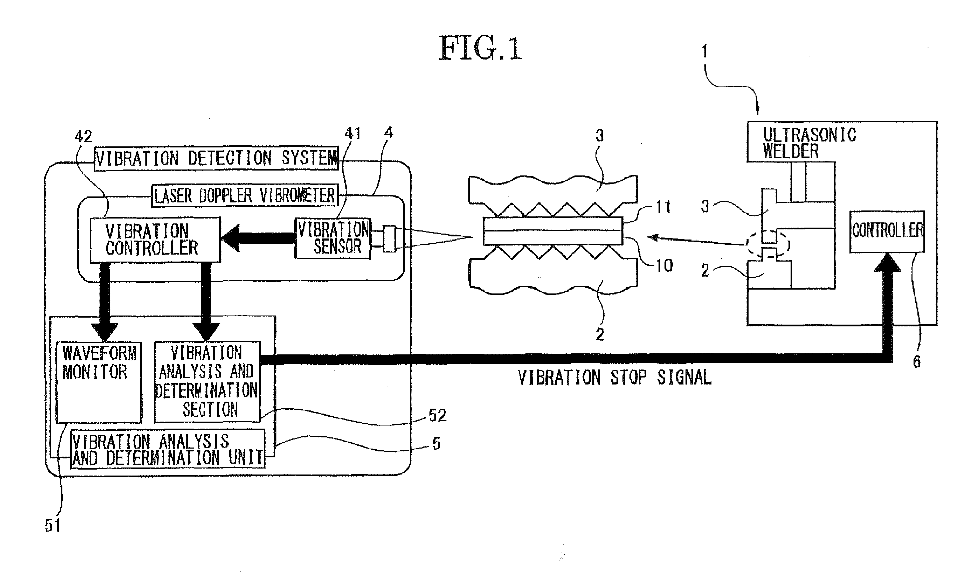

Referring to FIG. 1 illustrating a system of an ultrasonic welder 1 according to the First Embodiment of the present invention, the ultrasonic welder 1 is used for joining two first and second metal plates 10, 11. For example, the first metal plate 10 is made of a turned brass, for example, and the second metal plate 11 is made of a nickel-plated copper, for example.

The ultrasonic welder 1 includes an anvil 2, a horn 3, a vibration detection system, a controller 6, an ultrasonic transducer (not shown), and a pressure unit (not shown). The vibration detection system includes a laser Doppler vibrometer 4 and a vibration analysts and determination unit 5.

The laser Doppler vibrometer 4 is a vibration detector including a vibration sensor 41 and a vibration controller 42.

The vibration sensor 41 detects vibration generated in the first metal plate 10, so as to output a detection signal. The vibration controller 42 outputs a vibration waveform signal according to the detection signal output from the vibration sensor 41.

The vibration analysis and determination unit 5 is connected to the laser Doppler vibrometer 4. This vibration analysis and determination unit 5 includes a waveform monitor 51 such as an FFT analyzer or an oscilloscope, and a vibration analysis and determination section 52.

The waveform monitor 51 displays a vibration waveform signal output from the vibration controller 42 of the laser Doppler vibrometer 4. The vibration analysis and determination section 52 measures a size of amplitude and a duration time of vibration so as to output various control signals.

The controller 6 is connected to the vibration analysis and determination unit 5, for example. This controller 6 is configured to control the driving of the horn. 3. The controller 6 performs various controls such as she deriving control of the horn 3 according to the signals output from the vibration analysis and determination unit 5, for example.

Net, a method of joining the first and second metal plates 10, 11 in the above-described ultrasonic welder 1 will be described. At first an operator puts the first metal plate 10 on the anvil 2, and puts the second metal plate 11 on the first metal plate 10. After that, the operator presses a start switch (not shown) of the ultrasonic welder 1. Then, the pressure unit of the ultrasonic welder 1 presses the horn 3 downwardly, so that the two metal plates 10, 11 are sandwiched by the horn 3 and the anvil 2.

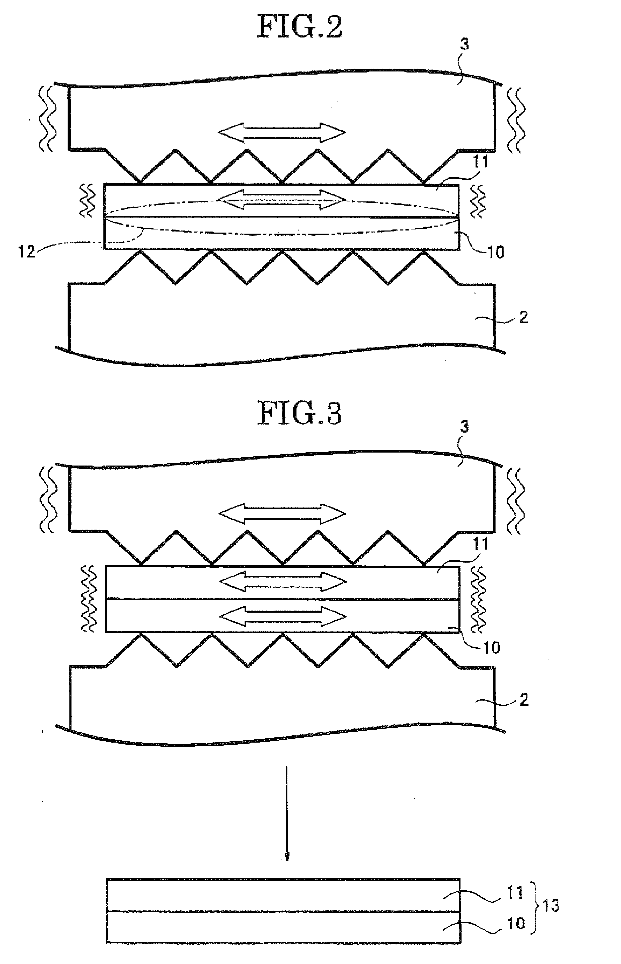

Next, the ultrasonic transducer of the ultrasonic welder 1 is activated. Upon the activation of the ultrasonic transducer, the horn 3 vibrates in the horizontal direction and the ultrasonic vibration is transmitted to the second metal plate 11 from the horn 3 as illustrated in FIG. 2.

The second metal plate 11 vibrates together with the vibration of the horn 3, and the first and second metal plates 10, 11 are rubbed against each other. Then, impurities which are adhered to the contact surfaces of the first and second metal plates 10, 11 such as an oxidized film are eliminated, and frictional heat is generated in an interface 12 of the first and second metal plates 10, 11. By this frictional heat, rapid plastic flow is created in the interface 12. Then, the first and second metal plates 10,11 start joining.

Upon the start of the joining of the first and second metal plates 10, 11, the first metal plate 10 stares vibrating as illustrated in FIG. 3. The duration time of this vibration is short, for example, 2-10ms. After this vibration, only the second metal plate 11 again vibrates as illustrated in FIG. 2.

After repeating the conditions illustrated in FIGs. 2, 3, for example, 5-7 times, the first and second metal plates 10, 11 are maintained in the condition illustrated in FIG 3. More particularly, the vibration of both plates 10, 11 is maintained, which represents that the joining of The first and second plates 10, 11 has been completed.

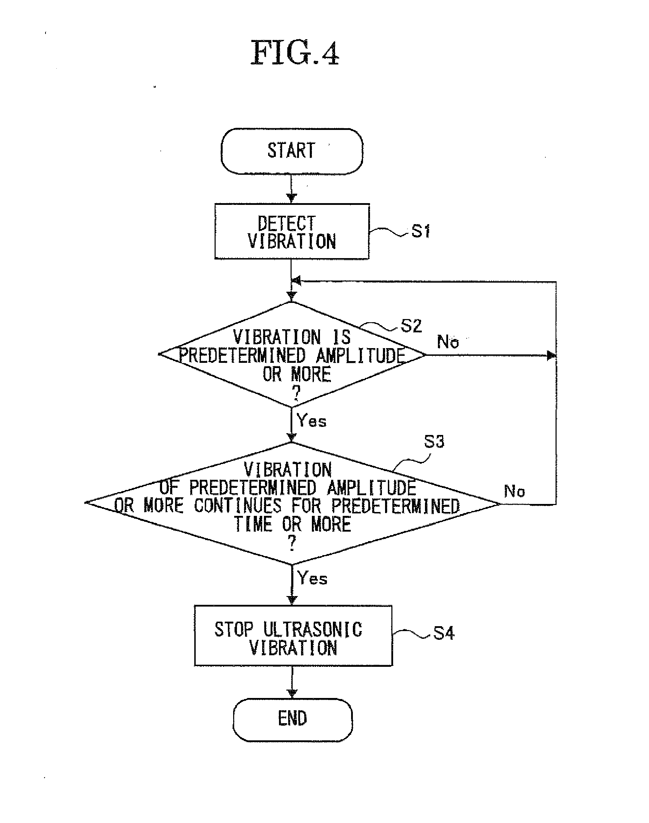

Accordingly, the ultrasonic welder 1 performs a control process of stopping the ultrasonic vibration of the horn 3. Such a controls process will be described with reference to the flow chart in FIG 4. This control process is conducted by using the vibration generated in the first metal plate 10 when joining the first and second metal plates 10, 11.

Referring now to FIG. 4, at first, upon the start of the ultrasonic vibration of the horn 3, the laser Doppler vibrometer 4 detects the vibration generated in the first metal plate 10 by means of the vibration sensor 41, and outputs the detected vibration to the vibration analysis and determination unit 5 as a vibration waveform signal by the vibration controller 42 (Step 1).

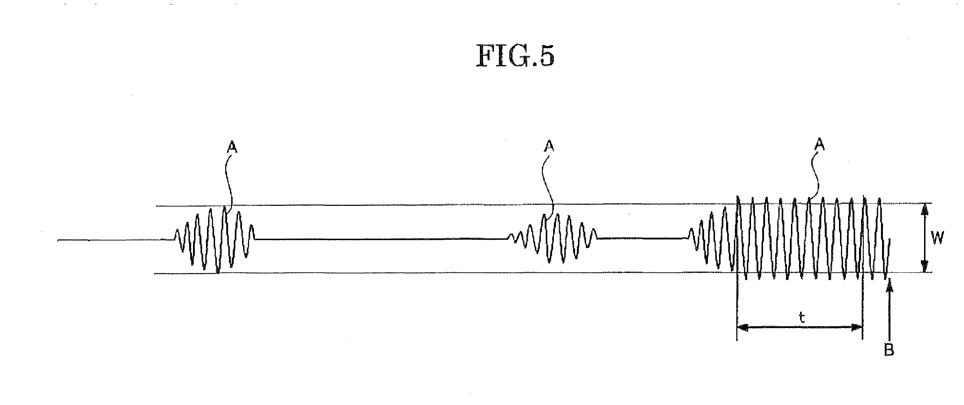

The vibration analysis and determination unit 5 displays the vibration waveform illustrated in FIG. 5, for example, on the waveform monitor 51 according to the vibration waveform signal output from the laser Doppler vibrometer 4. The vibration analysis and determination section 52 determines whether the amplitude of the vibration A generated in the first metal plate 10 is a predetermined amplitude W (refer to FIG. 5) or more (Step 2). The size of this predetermined amplitude W is previously determined by a joining experiment of the first and second metal plates 10, 11, and differs according to types of metal plates or various conditions in joining the metal plates.

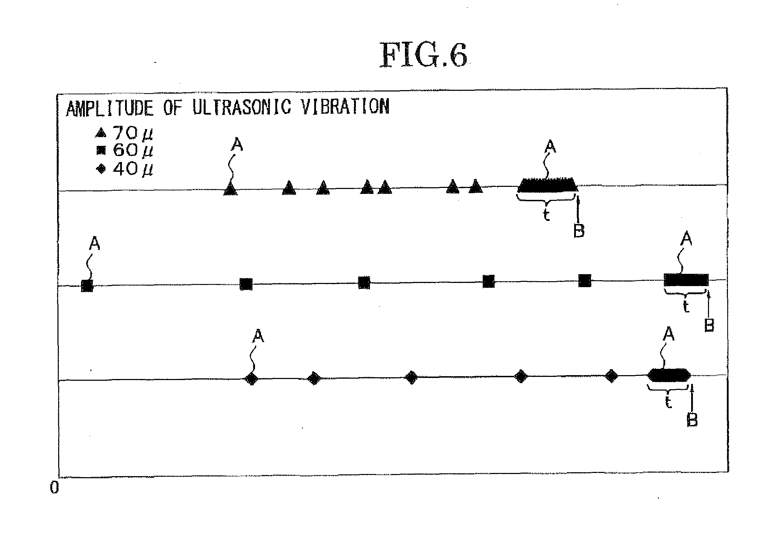

The vibration analysis and determination unit 5 measures a duration time of vibration (vibration time) according to the vibration waveform signal output from the laser Doppler vibrometer 4. FIG. 6 is a view illustrating a duration time of vibration. If the vibration analysis and determination unit 5 determines that the amplitude of the vibration A is a predetermined amplitude W or more (Yes at Step 2), the vibration analysis and determination unit 5 determines whether the vibration A illustrated in FIG 5, 6 continues for a predetermined time t or more (Step 3). This predetermined time t is previously determined by a joining experiment of the first and second metal plates 10, 11, and differs according to types of metal plates or various conditions in joining the metal plates.

If the vibration. A continues for a predetermined time t or more (Yes at Step 3), the vibration analysis and determination unit 5 determines that the joining of the first and second metal plates 10, 11 has been completed, and outputs a signal for stopping the ultrasonic vibration of the horn 3 to the controller 6.

The controller 6 stops the driving of the ultrasonic transducer according to the signal output from the vibration analysis and determination unit 5. The ultrasonic vibration of the horn 3 is thereby stopped at the point B illustrated in FIGs. 5, 6, so that the control process is completed (Step 4), As a result, a joined plate 13 illustrated in FIG. 3, for example, is obtained.

As described above, in the ultrasonic welder 1 of this embodiment, the ultrasonic vibration of the horn 3 is stopped just after the joining of the two metal plates 10, 11 is completed. Therefore, in the ultrasonic welder 1 of this embodiment, the anvil 2 and the first metal plate 10 are not rubbed together after the joining of the first and second plates 10, 11 is completed.

Consequently, the joined plate 13 does not become damaged in which the thickness in first metal plate 10 is reduced, for example. Accordingly, the ultrasonic welder 1 of the present embodiment can obtain the joined plate 13 in which the joining strength is stabilized. Since this joined pale 13 has joining strength which is more stabilized than that of a conventional joined plate, the quality of the joined plate 13 is improved.

### [Second Embodiment]

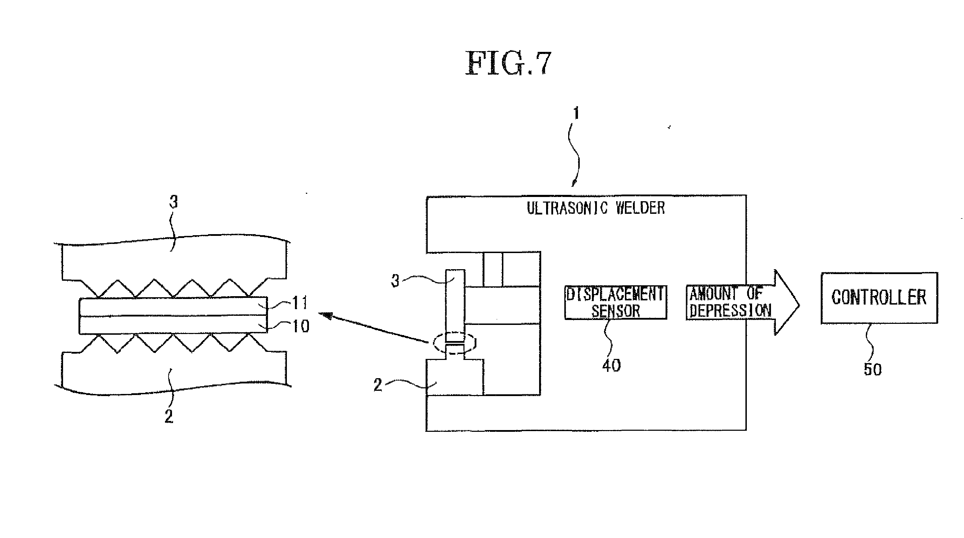

FIG 7 is a view illustrating a system of an ultrasonic welder 1 according to the Second Embodiment of the present invention. In this embodiment, since reference numbers which are the same as the reference numbers used in the First Embodiment are applied for the structures which are similar to the structures illustrated in the First Embodiment, the description thereof will be omitted. An ultrasonic welder 1 according to the Second Embodiment of the present invention is used for joining two first and second metal plates 10, 11. The first metal plate 10 is made of a tinned brass, for example, and the second metal plate 11 is made of a nickel-plated copper, for example.

This ultrasonic welder 1 includes an anvil 1, a horn 3, a displacement sensor 40, a controller 50, a vibration transducer (not shown) and a pressure unit (not shown).

The displacement sensor 40 is a depression detector. This displacement sensor 40 detects the amount of depression of the second metal plate 11 relative to the first metal plate 10, so as to output detection signals.

The controller 50 is connected to the displacement sensor 40, for example, and is configured to control the driving of the horn 3. The controller 50 performs various controls such as the driving control of the horn 3 according to various signals output from the displacement sensor 40 or the like.

In the ultrasonic welder 1 which is constituted as described above, since a method of joining the first and second metal plates 10, 11 is similar to the method described in the First Embodiment, the description thereof will be omitted.

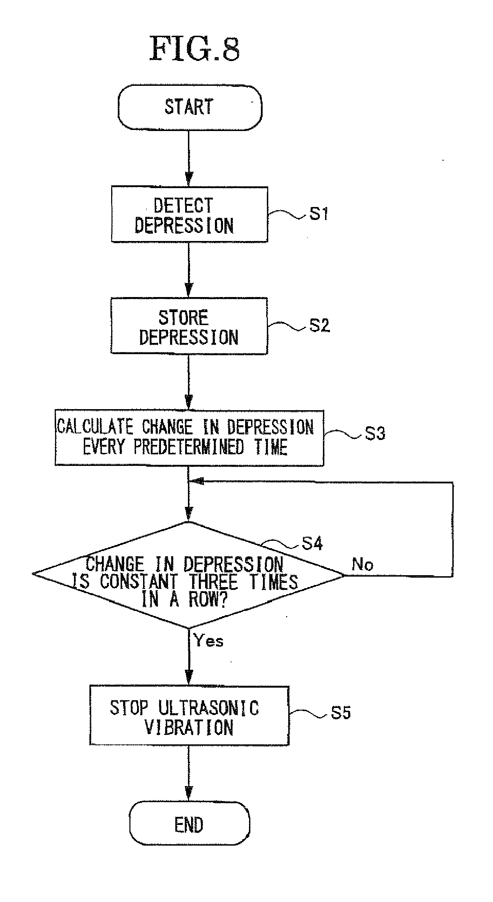

In the ultrasonic welder 1 according to the present embodiment, a control process of stopping the ultrasonic vibration of the horn 3 is different from the control process in the First Embodiment. The control process in this embodiment will be described with reference to the flow chart in FIG 8. This control process is conducted by using the depression of the second metal plate 11 relative to the first metal plate 10 when joining the first and second metal plates 10, 11.

At first, upon the start of the ultrasonic vibration of the horn 3, the displacement sensor 40 continuously detects the amount of depression of the second metal plate 11, and outputs a detection signal to the controller 50 (Step 1).

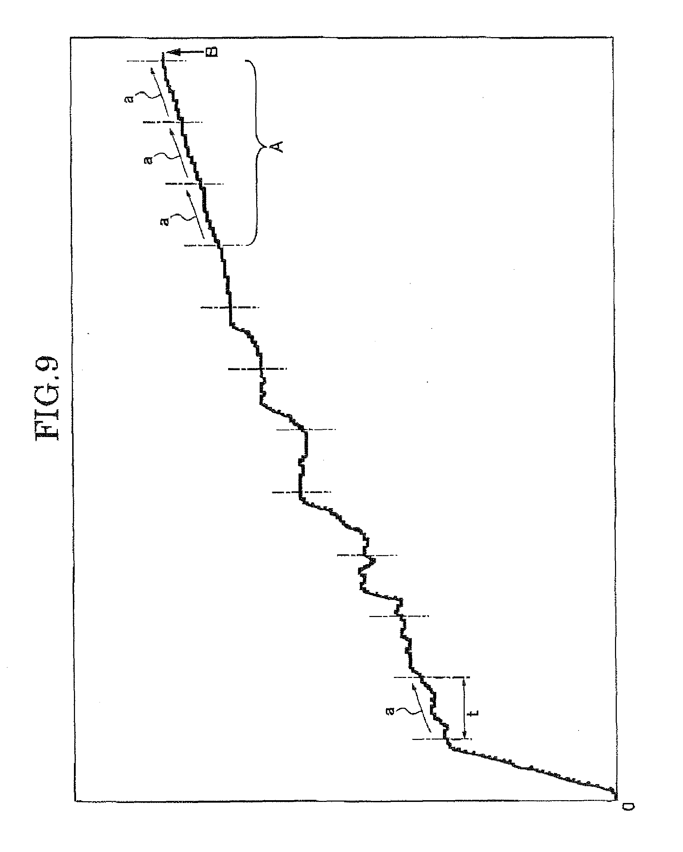

The controller 50 calculates the amount of depression of the second metal plate 11 according to the detection signal output from the displacement sensor 40, and sequentially stores the amount of depression (Step 2). FIG. 9 is a graph illustrating the change in the amount of depression of the second metal plate 11.

Referring now to FIG. 9, the controller 50 calculates the change (inclination) a in the amount of depression every predetermined time t from the start of storing of the amount of depression, and stores the calculated change (Step 3). This predetermined time t is previously determined according to a joining experiment of the first and second metal plates 10, 11. This predetermine time t is shorter than a time required for joining the metal plates 10, 11, and is set such that the change a in the amount of depression can be constantly obtained at least three time in a row after the joining of the metal plates 10, 11 is completed. This predetermined time t differs according to types of metal plates or various conditions in joining the metal plates.

Next, the controller 50 determines whether or not the change a in the amount of depression is constant three times in a row (Step 4). When the change a in the amount of depression is constant three times in a row as illustrated by A in FIG. 9 (Yes at Step 4), the controller 50 determines that the joining of the first and second metal plates 10, 11 is completed, and stops the driving of the ultrasonic transducer. The ultrasonic vibration of the horn 3 is thereby stopped at the point B in FIG. 9, and the control process is completed (Step 5), As a result, the joined metal plate 13 illustrated in FIG. 3, for example, can be obtained.

As described above, it is determined that the joining of the first and second metal plates 10, 11 is completed when the change a in the amount of depression is constant at least three times in a row. If the joining of the first and second metal plates 10, 11 is not completed, the first and second metal plates 10, 11 repeat the conditions illustrated in FIGs. 2, 3. Therefore, the change a in the amount of depression does not become constant. For this reason, it is necessary to check the change a in the amount of depression at least three times.

In the ultrasonic welder 1 of the present embodiment, the ultrasonic vibration of the horn 3 is stopped just after the joining of the metal plates 10, 11 is completed. Therefore, in the ultrasonic welder 1 of the present embodiment, the anvil 2 and the first metal plate 10 are not rubbed against each other after the joining of the metal plates 10, 11 is completed.

Therefore, the joined metal plate 13 does not become damaged in which the thickness in the first metal plate 10 is reduced. Consequently, the ultrasonic welder 1 of this embodiment can obtain the joined metal plate 13 in which the joining strength is stabilized. Since this joined metal plate 13 has joining strength which is more stabilized than that of a conventional joined metal plate, the quality of the joined metal plate 13 is improved.

In the ultrasonic welder according to one embodiment of the present invention, it is determined that the joining of the two metal plates is completed when the amplitude of the vibration of the first metal plate is a predetermined amplitude or more and the vibration continues for a predetermined time or more. The ultrasonic vibration of the horn is stopped according to this determination. Therefore, the anvil and the first metal plate are not excessively rubbed against each other; thus, the joined metal plate does not become damaged in which the thickness in the first metal plate is reduced. Accordingly, the ultrasonic welder according to one embodiment of the present invention can obtain the joined metal plate in which the joining strength is stabilized.

Moreover, the joined metal plate is obtained by joining the two metal plates by means of the ultrasonic metal welder. Therefore, the joined metal plate according to one embodiment of the present invention has the joining strength which is more stabilized than that of a conventional joined metal plate; thus, the quality of the joined metal plate is improved.

In the ultrasonic welder according to one embodiment of the present invention, it is determined that the joining of the two metal plates is completed when the change in the amount of depression of the second metal plate is constant at least three times in a row. The ultrasonic vibration of the horn is stopped according to this determination. Therefore, the anvil and the first metal plate are not excessively rubbed against each other; thus, the joined metal plate does not become damaged in which the thickness in the first metal plate is reduced. Accordingly, the ultrasonic welder according to one embodiment of the present invention can obtain the joined metal plate in which the joining strength is stabilized.

Moreover, the joined metal plate is obtained by joining the two metal plates by means of the ultrasonic metal welder, Therefore, the joined metal plate according to one embodiment of the present invention has the joining strength which is more stabilized than that of a conventional joined metal plate; thus, the quality of the joined metal plate is improved.

Although the embodiments of the present invention have been described above, the present invention is not limited thereto. It should be appreciated that variations may be made in the embodiments described by persons skilled in the art without departing from the scope of the present invention.

For example, in the First Embodiment, the laser Doppler vibrometer 4 is used as a vibration detector, but another vibrometer, a vibration sensor or the like can be used.

In addition, the displacement sensor 40 and the controller 50 in the Second Embodiment can be introduced into the ultrasonic welder described in the First Embodiment.

In this case, the ultrasonic vibration of the horn 3 is stopped when the condition in which the change in the amount of depression of the second metal plate is constant at least three times in a row is satisfied, in addition to the condition in which the amplitude of the vibration is predetermined amplitude or more and the vibration continues for a predetermined time or more.

Consequently, the point when the ultrasonic vibration of the horn is to be stopped can be accurately detected.

In addition, it is possible for a single controller to have the function of the controller 6 in the First Embodiment and the function of the controller 50 in the Second Embodiment. Therefore, the function of the ultrasonic welder is simplified.

Moreover, in the embodiments of the present invention, the ultrasonic welder is used for joining two metal plates. The ultrasonic welder of the present invention can be used for joining metal members which are not in the form of plates or members except metals such as synthetic resin members.

Furthermore, in the embodiments of the present invention, the anvil 2 and the horn 3 are disposed to face each other along the up and down direction. The anvil 2 and the horn 3 can be disposed to face each other along the lateral direction.

In this case, a mechanism for preventing the falling of the two members from the anvil 2 or horn 3 can be provided.

As described above, in the ultrasonic welder of the present invention, the joined metal plate having stabilized joining strength can be obtained. The quality of the joined metal plate is improved by the use of the ultrasonic welder of the present invention. Therefore, the present invention can be significantly used in the technical field of the ultrasonic welder.

## Claims

1. An ultrasonic welder, comprising:
an anvil (2):
a horn (3) configured to sandwich a first member (10) placed on the anvil (2) and a second member (11) placed on the first member (10) with the anvil (2), and transmit ultrasonic vibration to the second member (11), so as to join the first and second members (10, 11);
a vibration detector (4) configured to detect a condition of the vibration transmitted to the first member (10) from the second member (11); and
a controller (6) configured to stop the ultrasonic vibration of the horn (3) according to the detected condition of the vibration.

2. The ultrasonic welder according to Claim 1, further comprising a vibration analysis and determination unit (5) configured to measure amplitude of the vibration and a duration time of the vibration according to the detected condition of the vibration, and determine that the joining of the first and second members (10, 11) is completed when the amplitude of the vibration is predetermined amplitude or more and the duration time of the vibration is a predetermined time or more, wherein
the controller (6) stops the ultrasonic vibration of the horn (3) according to the determination of the vibration analysis and determination unit (5).

3. The ultrasonic welder according to Claim 2, wherein the vibration detector (4) detects vibration generated in the first member (10) from the start of the ultrasonic vibration of the horn (3), and outputs a vibration waveform signal, and the vibration analysis and determination unit (5) measures the amplitude of the vibration and the duration time of the vibration according to the vibration waveform signal output from the vibration detector (4).

4. The ultrasonic welder according to Claim 1 further comprising a detector (40) configured to continuously detect the amount of depression of the second member (11) from the start of the ultrasonic vibration of the horn (3), wherein
the controller (6) sequentially calculates the amount of depression of the second member (11) according to the detected result of the detector (40), so as to store the calculated result, calculates change in the amount of depression every predetermined time from the start of the storing, determines that the joining of the first and second members (10, 11) is completed when the change is constant at least three times in a row according to the condition of the vibration detected by the vibration detector (4), and stops the ultrasonic vibration of the horn (3) according to the determination.

5. A joined body obtained by using the ultrasonic welder according to Claim 1.

6. A joined body obtained by using the ultrasonic welder according to Claim 4.
